# EUROPÄISCHE PATENTSCHRIFT

(11) **EP 1 181 514 B1**
(45) Veröffentlichungstag und Bekanntmachung des Hinweises auf die Patenterteilung: **04.10.2006**
(21) Anmeldenummer: 99927829.4
(22) Anmeldetag: 01.06.1999
(51) Int. Cl.: G01L 1/22, G01G 3/14

(54) **ROTATIONSSYMMETRISCHE PLATTENFEDER FÜR EINE WÄGEZELLE**
ROTATIONALLY SYMMETRICAL DIAPHRAGM ELEMENT FOR A WEIGHING CELL
DIAPHRAGME ONDULE A SYMETRIE DE REVOLUTION POUR CELLULE DE PESEE

(43) Veröffentlichungstag der Anmeldung: 27.02.2002
(73) Patentinhaber: Sartorius Hamburg GmbH, 22145 Hamburg (DE)
(72) Erfinder: GOLLA, Lothar, D-22926 Ahrensburg (DE)
(74) Vertreter: Schüll, Gottfried Hubert
(86) Internationale Anmeldenummer: PCT/EP1999/003797
(87) Internationale Veröffentlichungsnummer: WO 2000/073757

(56) Entgegenhaltungen:
- EP-A- 0 635 707
- DE-A- 2 555 231
- US-A- 4 166 997
- US-A- 5 111 702

## Beschreibung

Die Erfindung betrifft eine rotationssymmetrische Plattenfeder für eine Wägezelle, mit einem Krafteinleitungsbereich, einem als Auflage auf einem Träger dienenden Auflagering und einer zwischen dem Krafteinleitungsbereich und dem Auflagering angeordneten, bei Krafteinleitung deformierten Membran.

Eine derartige rotationssymmetrische Plattenfeder für eine Wägezelle ist beispielsweise in der EP 0 351 006 A2 beschrieben. Bei den bekannten Plattenfedern besteht ein grundsätzliches Problem darin, daß bei einer Belastung der Plattenfeder neben der gewünschten Biegedeformation der Plattenfeder auch eine Verkippung des Auflagebereiches auftritt. Dies führt zu einer radialen Relativbewegung zwischen dem Auflagering und dem Träger. Die beschriebene radiale Relativbewegung führt zur Beeinflussung der Ausgangssignal Kraft-Kennlinie der Wägezelle. Es entsteht insbesondere eine unerwünschte Hysterese der Ausgangssignal Kraft-Kennlinie. Darüber hinaus zeigt sich, daß die Kenntlinie nicht gut reproduzierbar ist und daß sie von Temperaturschwankungen abhängig ist.

Aus der EP 0 351 006 A2 ist eine rotationssymmetrische Plattenfeder für eine Wägezelle bekannt, bei der die beschriebenen radialen Relativbewegungen dadurch umgangen werden, daß der Träger am Auflagering der Plattenfeder in einer Ringzone befestigt ist, in der die Radialdehnung praktisch null ist. Hierzu wird der Träger im bekannten Stand der Technik aus einem federelastischen Metallrohr ausgebildet, welches sich über eine federelastische Platte und einen zentrisch liegenden Auflagestutzen gegenüber einer Unterlage abstützt. Die rotationssymmetrische Plattenfeder und der Träger sind bei dem bekannten Stand der Technik über eine Schweißnaht verbunden.

Bei der bekannten rotationssymmetrischen Plattenfeder in Verbindung mit einem speziellen Träger ist einerseits problematisch, daß die Fertigung aufgrund der herzustellenden Schweißnaht relativ aufwendig ist. Darüber hinaus ist die bekannte Kombination aus einer Plattenfeder und einem Träger nur beschränkt dazu geeignet, seitliche Belastungen aufzunehmen. Schließlich ist die Bauhöhe dieser aus dem Stand der Technik bekannten Kombination aufgrund des unter der Plattenfeder angeordneten, speziell ausgebildeten Trägers relativ groß.

Ausgehend von dem beschriebenen Stand der Technik liegt der vorliegenden Erfindung die Aufgabe zugrunde, eine rotationssymmetrische Plattenfeder für eine Wägezelle zur Verfügung zu stellen, die bei verbesserter Funktionalität einen vereinfachten Aufbau aufweist.

Erfindungsgemäß ist die zuvor hergeleitete und aufgezeigte Aufgabe durch die Merkmale des Anspruchs 1 gelöst. Zwischen der Membran und dem Auflagering sind ein Kompensationsring und ein Kompensationssteg vorgesehen. Die Membran ist mit dem Kompensationsring und der Auflagering ist mit dem Kompensationssteg verbunden. Durch die erfindungsgemäße Anordnung eines Kompensationsrings und eines Kompensationssteges zwischen der Membran und dem Auflagering wird die bei Krafteinleitung über die Membran entstehende Radialbewegung in ein Kippmoment des Kompensationsringes umgewandelt, welches so weit über eine Radialbewegung des Kompensationssteges abgebaut wird, daß eine radiale Relativbewegung zwischen dem Auflagering und dem Träger weitestgehend vermieden wird, so daß sie im Ergebnis innerhalb der Genauigkeitsanforderungen keinen unerwünschten Einfluß mehr ausübt.

Dadurch, daß die erfindungsgemäße rotationssymmetrische Plattenfeder einen vorzugsweise relativ breiten Auflagering aufweist, können hier Gewindebohrungen zur Befestigung auf dem Träger mittels Schraubenbolzen angebracht sein, wodurch ein gesonderter Träger, wie er aus dem Stand der Technik bekannt ist, entfällt. Der Kompensationsring liegt vorzugsweise innerhalb des Auflagerings, dadurch kann die Plattenfeder insgesamt sehr flach gehalten werden.

Gemäß einer ersten Ausgestaltung ist die erfindungsgemäße rotationssymmetrische Plattenfeder dadurch weitergebildet, daß der Krafteinleitungsbereich, der Auflagering, die Membran, der Kompensationsring und der Kompensationssteg einstückig ausgeführt sind. Hierdurch ist gegenüber dem bekannten Stand der Technik eine deutliche Vereinfachung des Fertigungsprozesses gewährleistet, da die Notwendigkeit zur Herstellung einer im Stand der Technik erforderlichen Schweißnaht entfällt.

Ist der vorzugsweise breite Auflagering gemäß einer weiteren Ausgestaltung auf dem Träger gegen seitliche Verschiebung gesichert, so eignet sich die erfindungsgemäße rotationssymmetrische Plattenfeder aufgrund ihrer im wesentlichen horizontal ausgerichteten Geometrie in hohem Maße zur Aufnahme seitlicher Belastungen.

Dadurch, daß die Auflagefläche des Auflagerings gegenüber dem Träger einen größeren Innenradius und/oder einen geringeren Außenradius als der Auflagering aufweist ist gewährleistet, daß die noch einer geringen Radialdehnung ausgesetzten Bereiche des Auflagerings nicht mit dem Träger direkt in Berührung stehen. Hierdurch werden störende Gleitbewegungen zwischen dem Auflagering und dem Träger weiter minimiert.

Die erfindungsgemäße rotationssymmetrische Plattenfeder ist in ihrer Geometrie unter Verwendung der Finite-Element-Methode und experimenteller Versuche für verschiedene Laststufen optimiert worden. Diese Optimierung ergibt unabhängig von den Laststufen eine optimale Funktionalität der erfindungsgemäßen rotationssymmetrischen Plattenfeder wenn die nun folgenden geometrischen Beschränkungen eingehalten sind.

Ist die Dicke des Kompensationssteges im wesentlichen durch die Laststufenauslegung vorgegeben, so ist gewährleistet, daß die Kippbewegungen im Kompensationsring über den Kompensationssteg so weit als möglich abgebaut werden, da eine noch geringere Dicke für den Kompensationssteg, die einen noch besseren Abbau ermöglichen würde, die erforderliche Belastung nicht mehr zuließe.

Das Kippmoment, welches durch die Radialdehnung der Membran in den Kompensationsring eingeleitet wird, ist dadurch minimiert, daß die Membran mit dem in Krafteinleitungsrichtung unteren Ende des Kompensationsrings verbunden ist.

Dadurch, daß der Kompensationssteg mit dem Kompensationsring in etwa im Bereich der Mitte des Kompensationsrings verbunden ist, ist gewährleistet, daß der Anteil des in den Kompensationssteg eingeleiteten Kippmoments des Kompensationsrings möglichst gering ist.

Schließlich ist dadurch, daß der Kompensationssteg mit dem in Krafteinleitungsrichtung oberen Ende des Auflagerings verbunden ist, gewährleistet, daß die verbleibende radiale Relativbewegung, die in den Auflagering eingeleitet wird, bis zur Auflagefläche des Auflagerings so weit als möglich abgebaut ist.

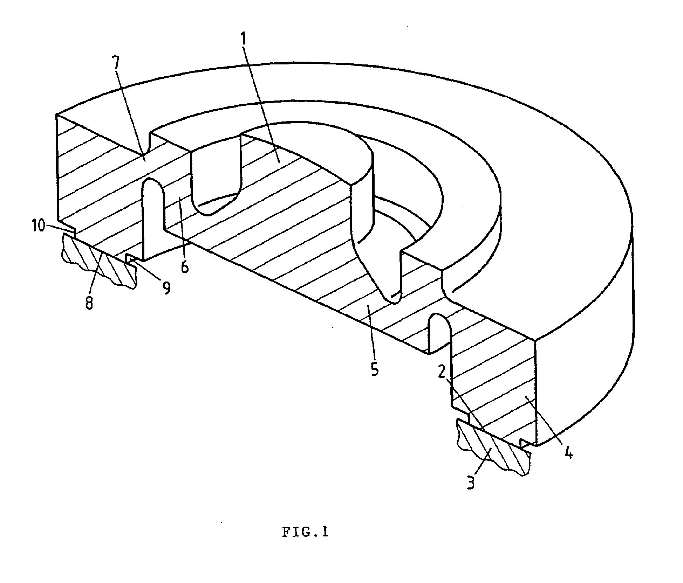

Es gibt nun eine Vielzahl von Möglichkeiten, die erfindungsgemäße rotationssymmetrische Plattenfeder für eine Wägezelle auszugestalten und weiterzubilden. Hierzu wird beispielsweise einerseits verwiesen auf die dem Patentanspruch 1 nachgeordneten Patentansprüche andererseits auf die Beschreibung eines bevorzugten Ausführungsbeispiels in Verbindung mit der Zeichnung.

In der Zeichnung zeigt die einzige Figur ein Ausführungsbeispiel einer erfindungsgemäßen rotationssymmetrischen Plattenfeder in einer perspektivischen Ansicht teilweise geschnitten.

Das in der einzigen Figur dargestellte Ausführungsbeispiel einer erfindungsgemäßen rotationssymmetrischen Plattenfeder weist, wie aus dem Stand der Technik bekannt, einen Krafteinleitungsbereich 1, einen als Auflage auf einem Auflagebereich 2 eines Trägers 3 dienenden Auflagering 4 und eine zwischen dem Krafteinleitungsbereich 1 und dem Auflagering 4 angeordnete, bei Krafteinleitung deformierte Membran 5 auf. Wie im Stand der Technik sind in der Regel auf der Unterseite der Membran 5 hier nicht dargestellte Dehnungsmeßstreifen zur Wandlung der Radialdehnung in ein elektrisches Signal angebracht. Durch eine geeignete Profilierung der Membran 5, bei dem dargestellten Ausführungsbeispiel durch einen kegelstumpfförmigen Übergang zwischen der Membran 5 und dem Krafteinleitungsbereich 1, ist ein möglichst linearer Zusammenhang zwischen der Krafteinleitung und dem Ausgangssignal hergestellt. Erfindungsgemäß ist zwischen der Membran 5 und dem Auflagering 4 ein Kompensationsring 6 und ein Kompensationssteg 7 vorgesehen, wobei die Membran 5 mit dem Kompensationsring 6 und der Auflagering 4 mit dem Kompensationssteg 7 verbunden sind.

Der Kompensationssteg 7 wird abhängig von der zu gewährleistenden Laststufe so dünn als möglich ausgebildet, um einen weitestgehenden Abbau von Radialdehnungen zu gewährleisten. Bei einem zu dünn ausgeführten Kompensationssteg 7 besteht die Gefahr, daß bei maximaler Belastung entlang des Kompensationssteges 7 das Material der Plattenfeder abschert.

Erfindungsgemäß wird die Radialdehnung in der Membran 5 in ein Kippmoment des Kompensationsringes 6 umgewandelt, welches durch die Radialdehnung des Kompensationssteges 7 so weit kompensiert wird, daß zwischen der Auflagefläche 8 und dem Auflagebereich 2 des Trägers 3 keine oder nur sehr geringe Gleitbewegungen stattfinden. Zur weiteren Minimierung dieser Gleitbewegungen ist die Auflagefläche 8 des Auflagerings 4 bei dem dargestellten Ausführungsbeispiel auf die einer möglichst geringen Radialdehnung unterworfenen mittleren Bereiche des Auflagerings 4 beschränkt. Hierzu verspringt der Innen- und der Außenradius des Auflagerings 4 auf einen größeren Innenradius 9 bzw. einen kleineren Außenradius 10.

Wie aus der Geometrie des in der einzigen Figur dargestellten Ausführungsbeispiels ohne weiteres ersichtlich, eignet sich die dargestellte Plattenfeder bei entsprechender Befestigung gegenüber dem Träger 3 ohne weiteres zur Aufnahme von seitlichen Belastungen. Auch ist in der einzigen Figur ohne weiteres die flache Bauform der erfindungsgemäßen Plattenfeder zu erkennen, die diese besonders für den Einsatz in flachen Wägezellen prädestiniert. Schließlich ist anhand des dargestellten Ausführungsbeispiels auch ohne weiteres erkennbar, daß sich eine erfindungsgemäße Plattenfeder ohne weiteres einstückig herstellen läßt.

## Patentansprüche

1. Rotationssymmetrische Plattenfeder für eine Wägezelle mit einem Krafteinleitungsbereich (1), einem als Auflage auf einem Träger (3) dienenden Auflagering (4) und einer zwischen dem Krafteinleitungsbereich (1) und dem Auflagering (4) angeordneten, bei Krafteinleitung deformierten Membran (5), wobei zwischen der Membran (5) und dem Auflagering (4) ein Kompensationsring (6) und ein Kompensationssteg (7) vorgesehen sind und die Membran (5) mit dem Kompensationsring (6) sowie der Auflagering (4) mit dem Kompensationssteg (7) verbunden sind, wobei die Membran (5) mit dem unteren Ende des Kompensationsrings (6) verbunden ist und der Kompensationssteg (7) mit dem Kompensationsring (6) in einem Bereich oberhalb des unteren Endes des Kompensationsrings (6) verbunden ist, bezogen auf die Krafteinleitungsrichtung, derart, dass eine Radialdehnung in der Membran (5) in ein Kippmoment des Kompensationsringes (6) umgewandelt wird.

2. Rotationssymmetrische Plattenfeder nach Anspruch 1,
**dadurch gekennzeichnet, daß** der Krafteinleitungsbereich (1), der Auflagering (4), die Membran (5), der Kompensationsring (6) und der Kompensationssteg (7) einstückig ausgeführt sind.

3. Rotationssymmetrische Plattenfeder nach Anspruch 1 oder 2,
**dadurch gekennzeichnet, daß** der Auflagering (4) auf dem Träger (3) gegen seitliche Verschiebung gesichert ist.

4. Rotationssymmetrische Plattenfeder nach einem der Ansprüche 1 bis 3,
**dadurch gekennzeichnet, daß** die Auflagefläche (8) des Auflagerings (4) gegenüber dem Träger (3) einen größeren Innenradius und/oder einen geringeren Außenradius als der Auflagering (4) aufweist.

5. Rotationssymmetrische Plattenfeder nach einem der Ansprüche 1 bis 4,
**dadurch gekennzeichnet, daß** die Dicke des Kompensationssteges (7) im wesentlichen durch die Laststufenauslegung vorgegeben ist.

6. Rotationssymmetrische Plattenfeder nach einem der Ansprüche 1 bis 5,
**dadurch gekennzeichnet, daß** der Kompensationssteg (7) mit dem Kompensationsring (6) in etwa im Bereich der Mitte des Kompensationsrings (6) verbunden ist.

7. Rotationssymmetrische Plattenfeder nach einem der Ansprüche 1 bis 6,
**dadurch gekennzeichnet, daß** der Kompensationssteg (7) mit dem in Krafteinleitungsrichtung oberen Ende des Auflagerings (4) verbunden ist.

## Claims

1. Rotationally-symmetrical diaphragm element for a weighing cell, comprising a force-application area (1), a supporting ring (4) which is used as a support on a carrier (3) and a membrane (5) which is located between the force-application area (1) and the supporting ring (4) and which deforms when force is applied, whereby a compensation ring (6) and a compensation strut (7) are provided between the membrane (5) and the supporting ring (4) and the membrane (5) is connected to the compensation ring (6) and the supporting ring (4) is connected to the compensation strut (7) in an area above the lower end of the compensation ring (6), in such a way that in relation to the direction of application of force, any radial extension in the membrane (5) is converted into a moment of tilt of the compensation ring (6).

2. Rotationally-symmetrical diaphragm element according to claim 1, **characterised in that** the force-application area (1), the supporting ring (4), the membrane (5), the compensation ring (6) and the compensation strut (7) are produced in a single piece.

3. Rotationally-symmetrical diaphragm element according to claim 1 or 2, **characterised in that** the supporting ring (4) is secured on the carrier (3) against lateral displacement.

4. Rotationally-symmetrical diaphragm element according to one of claims 1 to 3, **characterised in that** the supporting area (8) of the supporting ring (4) has a greater inner radius than the carrier (3) and/or a smaller outer radius than the supporting ring (4).

5. Rotationally-symmetrical diaphragm element according to one of claims 1 to 4, **characterised in that** the thickness of the compensation strut (7) is essentially defined by the dimensioning of the load steps.

6. Rotationally-symmetrical diaphragm element according to one of claims 1 to 5, **characterised in that** the compensation strut (7) is connected to the compensation ring (6) approximately in the area of the middle of the compensation ring (6).

7. Rotationally-symmetrical diaphragm element according to one of claims 1 to 6, **characterised in that** the compensation strut (7) is connected to the upper end of the supporting ring (4) in the direction of application of force.

## Revendications

1. Diaphragme ondulé à symétrie de révolution pour une cellule de pesée, comportant une zone d'application de la force (1), une bague d'appui (4) servant d'appui sur un support (3), et une membrane (5) déformée par l'application de la force, disposée entre la zone d'application de force (1) et la bague d'appui (4), dans lequel une bague de compensation (6) et une bride de compensation (7) sont prévues entre la membrane (5) et la bague d'appui (4), et la membrane (5) est reliée à la bague de compensation (6) et la bague d'appui (4) à la bride de compensation (7), la membrane (5) étant reliée à l'extrémité inférieure de la bague de compensation (6) et la bride de compensation (7) à la bague de compensation (6) dans une zone située au-dessus de l'extrémité inférieure de la bague de compensation (6), par rapport au sens d'application de la force, de telle manière qu'un allongement radial dans la membrane (5) est converti en un couple de renversement de la bague de compensation (6).

2. Diaphragme ondulé à symétrie de révolution selon la revendication 1, **caractérisé en ce que** la zone d'application de la force (1), la bague d'appui (4), la membrane (5), la bague de compensation (6) et la bride de compensation (7) sont réalisées d'un seul tenant.

3. Diaphragme ondulé à symétrie de révolution selon la revendication 1 ou 2, **caractérisé en ce que** la bague d'appui (4) est protégée sur le support (3) contre un déplacement latéral.

4. Diaphragme ondulé à symétrie de révolution selon une des revendications 1 à 3, **caractérisé en ce que** la surface d'appui (8) de la bague d'appui (4) présente par rapport au support (3) un rayon intérieur plus grand et/ou un rayon extérieur plus petit que la bague d'appui (4).

5. Diaphragme ondulé à symétrie de révolution selon une des revendications 1 à 4, **caractérisé en ce que** l'épaisseur de la bride de compensation (7) est essentiellement prédéfinie par l'étagement des niveaux de charge.

6. Diaphragme ondulé à symétrie de révolution selon une des revendications 1 à 5, **caractérisé en ce que** la bride de compensation (7) est reliée à la bague de compensation (6) quasiment dans la zone du milieu de la bague de compensation (6).

7. Diaphragme ondulé à symétrie de révolution selon une des revendications 1 à 6, **caractérisé en ce que** la bague de compensation (7) est reliée à l'extrémité supérieure de la bague d'appui (4) dans le sens de l'application de la force.
